# EUROPÄISCHE PATENTSCHRIFT

(11) **EP 1 731 877 B1**
(45) Veröffentlichungstag und Bekanntmachung des Hinweises auf die Patenterteilung: **10.09.2008**
(21) Anmeldenummer: 05012343.9
(22) Anmeldetag: 08.06.2005
(51) Int. Cl.: G01D 5/347, G01B 5/00

(54) **Geberelement eines Messsystems**
Encoder of a measurement system
Codeur d'un système de mesure.

(43) Veröffentlichungstag der Anmeldung: 13.12.2006
(73) Patentinhaber: Dr. Johannes Heidenhain GmbH, 83301 Traunreut (DE)
(72) Erfinder: Böge, Ludwig, 07751 Jena OT Jenapriessnitz/Wogau (DE); Franz, Heinz-Günther, 22359 Hamburg (DE); Freitag, Hans-Joachim, Dr., 99084 Erfurt (DE); Schmidt, Andreas, 99089 Erfurt (DE)
(74) Vertreter: Geyer, Fehners & Partner

(56) Entgegenhaltungen:
- GB-A- 1 050 061
- US-A- 4 912 856
- US-A- 5 711 084
- US-A1- 2002 090 152

## Beschreibung

Die Erfindung bezicht sich auf ein Geberelement eines Meßsystems zur Erfassung einer Längsbewegung eines ersten Bauteils gegenüber einem zweiten Bauteil, wobei das Geberelement zur Befestigung an dem ersten Bauteil ausgebildet ist und eine Maßverkörperung aufweist, die in einem Fixpunkt am ersten Bauteil starr befestigbar ist und die in einem ebenfalls am ersten Bauteil starr befestigbaren Profilteil in der Richtung der Relativbewegung der Bauteile geführt ist, um unterschiedliche thermische Ausdehnungen von befestigtem Profilteil und Maßverkörperung auszugleichen, wobei die Führung der Maßverkörperung innerhalb des Profilteils durch eine im wesentlichen fluidfreie Lagerung bewirkt und ab Wälzlagerung mit Wälzkörpern ausgebildet ist.

Ein solches Geberelement ist aus der GB-A-1050061 bekannt.

Die US-A-4912856 und die US-A-5711084 beschreiben Maßverkörperungen, die mittels elastischer Verklebungen auf Trägern befestigt sind.

Aus der US-A-2002/0090152 ist es bekannt, Lagerkugeln einer Kugelumlaufführung mittels einer Schnur zu verbinden.

Aus der US 5,979,238 ist ein bandförmiges, elastisch biegsames Maßband für Längen- oder Winkelmeßeinrichtungen bekannt, das eine Meßteilung aufweist und aus zwei elastisch biegbaren Streifen besteht, die gegeneinander über einen viskosen Zwischenfilm haftend gelagert sind. Auf einem der Streifen ist eine Meßteilung aufgebracht. Mit der vorgeschlagenen Anordnung lassen sich zwar ebenfalls sehr unterschiedliche thermische Ausdehnungen der aneinander haftenden Streifen ausgleichen. Das aus dieser Druckschrift bekannte Maßband ist nur für Auflichtmeßverfahren tauglich.

Demgegenüber ist es Aufgabe der vorliegenden Erfindung, ein verbessertes Geberelement der eingangs genannten Art anzugeben, das auch für Durchlichtverfahren geeignet ist.

Erfindungsgemäß wird diese Aufgabe durch ein Geberelement mit den Merkmalen des unabhängigen Ansprüches gelöst. Die Erfindung verfolgt also das Prinzip einer nicht-schwimmenden Lagerung, die nicht auf einer Schmierung der relativ zueinander bewegten Flächen beruht. Ihre Lagerung besteht vielmehr aus einer- Wälzlagerung, die es erlaubt, daß die Maßverkörperung umgreifend abgetastet werden kann. Diese Lagerung hat zudem gegenüber fluidischen Lagerungen den Vorteil, so gut wie keinen Staub zu binden und ist auch für Anwendungen im Vakuum tauglich.

Gewöhnlich werden Lagerungen an einer Lagerfläche eines beweglich zu lagernden Bauteils angeordnet, die sich in der Bewegungsrichtung des Bauteils erstreckt. Schwerkraftbedingt ist dies bei fluidischen Lagerungen regelmäßig eine waagrecht ausgerichtete Fläche an einer Unterseite des zu lagernden Bauteils. Nach einer vorteilhaften Ausgestaltung der Erfindung umfaßt das Geberelement eine an der Maßverkörperung mehrseitig, also an mehreren Längsseiten angreifende Lagerung. Die erfindungsgemäße Lagerung wirkt dann also auf mehrere Längsseiten der Maßverkörperung, die sich in die Richtung der zu detektierenden Relativbewegung erstrecken. Sie nutzt folglich mehrere Flächen zur Lagerung bzw. Führung, was einen Durchlichteinsatz der Maßverkörperung vereinfacht. Vorzugsweise wird eine zweiseitige Lagerung gewählt, wodurch eine besonders exakte Führung der Maßverkörperung erzielt werden kann.

Den konstruktiven Erfordernissen, zum Beispiel den Platzverhältnissen, entsprechend können die Lagerflächen beliebig zueinander orientiert sein. Beispielsweise können sie einen Winkel miteinander einschließen. Nach einer vorteilhaften Ausgestaltung der Erfindung greift die Lagerung an der Maßverkörperung an einander gegenüberliegenden Flächen an. Dadurch wird eine exaktere Führung der Maßverkörperung im Profilteil bewirkt, weil sie eine Zwangsführung der Maßverkörperung darstellt und außerdem deren Kippmomente aufnehmen kann. Wirkt die Lagerung zum Beispiel an vertikalen Längsseiten, also in einer horizontalen Lagerungsrichtung der Maßverkörperung, so kann deren Abtastung zudem entweder in einer dazu senkrechten Abtastrichtung oder parallel zur Lagerungsrichtung in einem lagerfreien Bereich der Maßverkörperung erfolgen. Insbesondere bei einer Abtastung in der senkrechten Abtastrichtung kann die Maßverkörperung mit besonders geringen Abmessungen konstruiert werden. Außerdem ermöglicht die Lageranordnung an einander gegenüberliegenden Flächen eine Abtastung sowohl im Auflicht- als auch im Durchlichtverfahren.

Erfindungsgemäß ist die fluidfreie Lagerung als Wälzlagerung mit Wälzkörpern ausgebildet. Als Wälzkörper werden dazu vorzugsweise Kugeln oder Roll- oder Zylinder eingesetzt. Die Wälz- oder Kugellagerung ist eine bekannte Technologie, die in nahezu jeder Dimensionierung hochgenau hergestellt werden kann.

Nach einer weiteren vorteilhaften Ausgestaltung der Erfindung umfaßt die Lagerung Abstandhalter, die beim Zusammenbau von Profilteil und Maßverkörperung einen vorbestimmten Abstand zwischen Roll-, Gleit- oder Wälzkörpern sicherstellen. Sie erleichtern damit die Montage. Damit wird erreicht, daß die Maßverkörperung über ihre gesamte Länge gleichmäßig gelagert ist. Weiter muß gesichert sein, daß sich die Wälzkörper im Betrieb nicht unerwünscht verschieben. Andernfalls könnte dadurch eine Beeinträchtigung der Lagerwirkung entstehen.

Ein Kriterium zur Bemessung der Abstände zwischen den Wälzkörpern kann zum Beispiel die Vermeidung von Eigenfrequenzen der Maßverkörperung sein. Die Fixierung kann durch die Abstandhalter bewirkt sein, die dann zusätzlich zur Montagehilfe eine Zweitfunktion haben. Natürlich sind auch andere Mittel zur Fixierung denkbar, z.B. eine Vorspannung zwischen Profilteil und Maßverkörperung, welche die Körper hält.

Abstandhalter für Wälzkörper sind an sich zum Beispiel als sogenannte Kugelkäfige bekannt. Nach weiteren vorteilhaften Ausgestaltungen der Erfindung sind die Körper auf eine Schnur aufgefädelt, die als Abstandhalter beidseits jedes Körpers eine Verdickung zur Definition der Lage des Körpers aufweist. Gegenüber einem Kugelkäfig als Abstandhalter weist diese Vorrichtung weniger Restreibung auf. Da Wälzkörper nur kleinsten Verdrehungen unterliegen, ist zudem nahezu keine Elastizität der Schnur erforderlich.

Die Maßverkörperung weist also einen Abschnitt mit einer Maßeinteilung auf, die abgetastet wird, und einen Abschnitt, mit dem sie im Profilteil gelagert bzw. geführt ist. Nach einer weiteren vorteilhaften Ausgestaltung der Erfindung umfaßt die Maßverkörperung einen Maßstab mit einer Maßeinteilung und eine separate Fassung, mit der die Maßverkörperung in dem Profilteil geführt ist. Die Fassung ist vorzugsweise jochförmig ausgebildet und umgreift den Maßstab U-förmig an einer seiner Schmalseiten. Die separate Ausbildung einer Fassung erleichtert die Anordnung von Lagerflächen an der Maßverkörperung. So können zum Beispiel leichter Nuten als Laufflächen für die Kugeln eines Kugellagers in die Fassung eingefräst werden als etwa in einen Glasmaßstab selbst.

Die Fassung kann zudem wahlweise durchgehend oder abschnittsweise an dem Maßstab angeordnet sein. In einer durchgehenden Ausführung kann ein schmalerer Maßstab in die Fassung eingesetzt werden. Dann kann der Meßspalt zur Abtastung des Maßstabs besonders schmal ausfallen. Dadurch kann das Meßsystem mit reduzierten Abmessungen und kompakter hergestellt werden und arbeitet präziser, weil parallaxenfreier. Außerdem kann der Meßspalt leichter gegen Verschmutzungen abgedichtet werden. Der Verlust an Biegesteifigkeit des Maßstabs kann vorteilhaft durch die Verwendung eines biegesteifen Profils als Fassung ausgeglichen werden. Bei längs dem Maßstab durchlaufender Fassung sollten Maßstab und Fassung möglichst gleiche thermische Ausdehnungseigenschaften haben.

Alternativ kann die Fassung den Maßstab auch nur abschnittsweise fassen. Diese abschnittsweise Ausführung der Fassung kann Probleme mit unterschiedlichen thermischen Ausdehnungskoeffizienten verschiedener Materialien für den Maßstab einerseits und die Fassung andererseits vermeiden oder reduzieren. Dadurch verursachte Spannungen oder Verformungen treten dann ggf. nur noch in den verhältnismäßig kleinen Abschnitten der Fassung auf, wodurch der Einfluß auf das Meßergebnis auf einen vernachlässigbaren Umfang vermindert ist.

Das Prinzip der Erfindung wird im Folgenden anhand einer Zeichnung beispielshalber noch näher erläutert. In der Zeichnung zeigen:
- Figur 1: einen Längsschnitt eines montierten Geberelements,
- Figur 2: einen Querschnitt durch das Geberelement, und
- Figur 3: einen Querschnitt durch ein alternatives Geberelement.

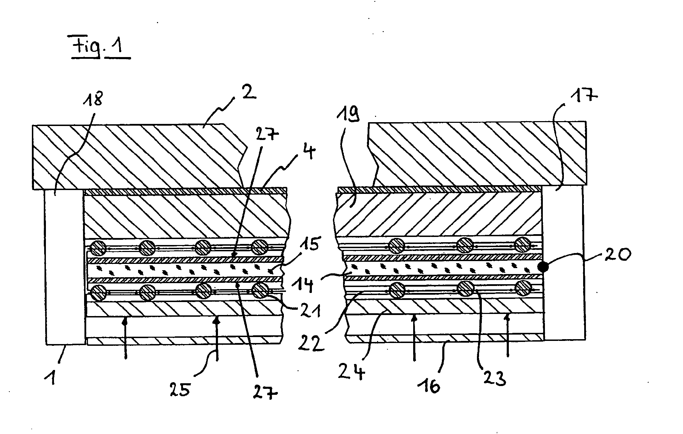

Figur 1 zeigt ein Geberelement 1 im montierten Zustand an einem Maschinenteil 2 in einem Längsschnitt. Das Maschinenteil 2 stellt ein erstes Bauteil dar, dessen Relativbewegung bezüglich einem zweiten Bauteil, das der Einfachheit halber nicht dargestellt ist, erfaßt werden soll. Das Geberelement 1 ist hier ein Linear-Geberelement und weist als Maßverkörperung einen Maßstab 14 auf, der eine zur Messung verwendete Teilungsstruktur 15 trägt. Im Interesse einer möglichst temperaturunabhängigen Messung besteht der Maßstab 14 zum Beispiel aus Kunststoff oder Glas mit einem bekannten thermischen Ausdehnungskoeffizienten. Ein Gehäuse 16 ist in der Ausführungsform der Figur 1 aus zwei Endstücken 17 und 18 mit einem dazwischenliegenden Profilstrang 19 als Profilteil aufgebaut.

Das Gehäuse 16, d.h. die Endstücke 17 und 18 sowie der Profilstrang 19, ist mit einer Kleberschicht 4 mit dem Maschinenteil 2 geeignet fest verbunden. Um thermische Spannungen zum Maschinenteil 2 zu vermeiden, ist der Profilstrang 19 aus einem Material gefertigt, dessen thermischer Ausdehnungskoeffizient dem des Maschinenteils 2 möglichst entspricht, zumindest ihm nahe kommt. Um unterschiedliches thermisches Ausdehnungsverhalten zwischen dem Maßstab 14 und dem Gehäuse 16 auszugleichen, ist der Maßstab 14 an einem Fixpunkt 20 mit dem Maschinenteil 2 starr verbunden. Dies kann über das Gehäuse 16, zum Beispiel dessen Endstück 17, erfolgen. Zum Beispiel liegt dieser Fixpunkt 20 am Übergang zwischen Maßstab 14 und Endstück 17. In den übrigen Bereichen ist der Maßstab 14 hier durch eine Wälzlagerung im Gehäuse 16 gehalten und so in dem Profilstrang 19 geführt, daß eine durch thermische Effekte bewirkte Relativbewegung zwischen dem Maßstab 14 und dem Gehäuse 16 möglich ist, ohne daß Spannungen zwischen diesen Teilen entstehen und dadurch das Meßergebnis verfälschen. Die Wälzlagerung entkoppelt also den Maßstab 14 und das Gehäuse 16, so daß eine freie Dehnung des Maßstabs 14 ausgehend vom Fixpunkt 20 erfolgen kann.

Zur Ausbildung einer Wälzlagerung sind in dieser Ausführungsform im Gehäuse 16 Kugeln 21 beiderseits längs des Maßstabs 14 angeordnet, die ihn im Gehäuse 16 halten. Der Maßstab 14 weist einen schlanken Rechteckquerschnitt mit langen und kurzen Längsseiten auf, die in der Bewegungsrichtung des Maßstabs 14 verlaufen. Die Kugeln 21 greifen an einander gegenüberliegenden Längsseiten des Maßstabs 14 auf Lagerflächen 27 an.

Die Kugeln 21 sitzen beiderseits des Maßstabs 14 jeweils auf einer Schnur 22, die jede der Kugeln 21 durch Verdickungen 23 beiderseits jeder Kugel lagefixiert. Dies ist eine Maßnahme zur leichteren Montage, da dann beim Zusammenbau nur eine Kugelkette eingesetzt werden muß. Ansonsten ist die Schnur 22 für die Lagerung ohne Bedeutung. Im Ergebnis ist der Maßstab 14 also durch beiderseits angeordnete Kugelreihen wälzgeführt. Die durch die Lagerung geführte Bewegung des Maßstabs 14 beruht auf dessen gegenüber dem Profilstrang 19 abweichender Temperaturdehnung. Sie verkippt die Kugeln 21. Diese Kippung oder Drehung wird von der Schnur 22 nicht behindert, weil sie sonst die Lagereigenschaften verschlechtern würde. Da die Temperaturdehnung des Maßstabs 14 nur geringe Relativverschiebungen gegenüber dem Profilstrang 19 hervorruft, führen die Kugeln 21 dabei eine Kippung bzw. Drehung nur um geringe Drehwinkel aus, was von der Schnur 22 nicht behindert wird.

Durch einen im Profilstrang 19 vorgesehenen und parallel zum Maßstab 14 verlaufenden Federsteg 24 werden die Kugeln 21 mit dem Maßstab 14 verspannt. Der Federsteg 24 bewirkt eine Kraft in Richtung der Pfeile 25 der Figur 1. Diese Vorspannung sorgt für eine beständige Andruckkraft der Lagerkugeln 21 an den Maßstab 14, so daß auch bei einer temperaturbedingten Abnahme der Abmessung in Querrichtung des Maßstabs 14 unzulässiges Spiel auftritt.

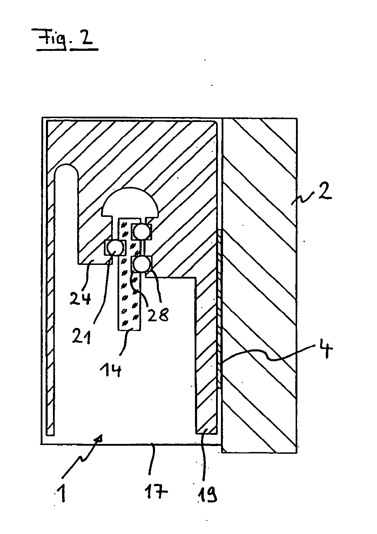

Figur 2 zeigt schematisch einen Schnitt durch eine mögliche Bauweise eines durchgehenden Profilteils 19. Es ist über die Klebeschicht 4 an dem Maschinenteil 2 befestigt. Die Ausbildung des Federstegs 24 ist in der Schnittdarstellung der Figur 2 gut zu erkennen. Er ist Bestandteil des Profilteils 19, in dem der Maßstab 14 mittels dreier Ketten aus Kugeln 21 in einer Wälzführung bzw. -lagerung geführt ist. Die Lagerflächen an dem Maßstab 14 und deren Entsprechungen am Profilstrang 19 sind als Nuten 28 ausgebildet, die in der Längsrichtung des Geberelements 1 in den Maßstab 14 und in dem Profilstrang 19 eingefräst sind. Neben der Vermeidung von Spiel dient der Federsteg 24 auch der Vereinfachung der Montage der Lagerkugeln 21. Sie werden montiert, indem der Federsteg 24 geringfügig aufgebogen wird, so daß die auf der Schnur 22 aufgefädelten Kugeln 21 in die entsprechenden Nuten 28 am Profilstrang 19 und am Maßstab 14 eingesetzt werden können.

Der Profilstrang 19 umgibt den Maßstab 14 U-förmig. Von der Öffnungsseite des U-förmigen Profilteils 19 (in Figur 2 von unten her) greift im Betrieb eine nicht dargestellte Abtasteinheit in den Profilstrang 19 ein, so daß der Maßstab 14 zumindest im Bereich seiner Abtastung von allen Seiten umgeben und damit nahezu vollständig gegen eventuelle Verschmutzung gekapselt ist.

In Figur 1 sind die Kugeln 21 in zwei einander unmittelbar gegenüberliegenden Reihen angeordnet. Figur 2 zeigt eine alternative Anordnung der Kugeln 21 in drei Reihen, zwei auf der einen und eine auf der gegenüberliegenden anderen Seite des Maßstabs 14. In dieser Konfiguration kann die Lagerung auch Kippmomente des in dieser Ausführungsform hängend gelagerten Maßstabs 14 aufnehmen und stellt damit eine besonders exakte Führung des Maßstabs 14 sicher. Der Maßstab 14 weist zudem einen lagerfreien Bereich auf, der von beiden Seiten her zugänglich ist und daher wahlweise entweder im Auflicht- oder im Durchlichtverfahren abgetastet werden kann.

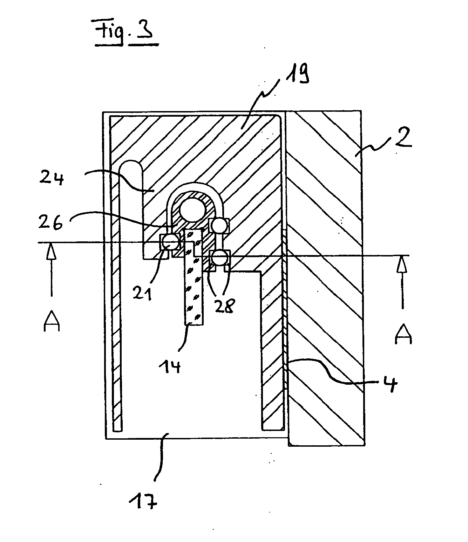

Figur 3 stellt einen mit Figur 2 vergleichbaren Aufbau eines Geberelements 1 dar, wobei allerdings in Abweichung von der Darstellung der Figur 2 der Maßstab 14 in einem Joch 26 als Fassung gehaltert ist. Er umgreift den Maßstab 14 U-förmig in dessen oberen Hälfte und läßt eine untere Hälfte zur Abtastung frei. Das Joch 26 und der Maßstab 14 sind dabei starr miteinander verbunden. Das Joch 26 ist gegenüber dem Profilstrang 19 kugelgelagert gehalten. Die Nuten 28, die als Lagerflächen der Kugeln 21 dienen, sind jetzt am Joch 26 ausgebildet. Dieser Aufbau eignet sich insbesondere für Maßverkörperungen, bei denen der Maßstab 14 und das Joch 26 zum Beispiel aus Fertigungsgründen aus unterschiedlichen Materialien bestehen.

Abweichend von Figur 1 können die Geberelemente 1 auch nur ein Endstück 17 und kein Endstück 18 aufweisen. Das Gehäuse 16 umfaßt demzufolge nur den Profilstrang 19 und das Endstück 17 und ist auf der dem Endstück 17 gegenüberliegenden Seite offen. Der Fixpunkt 20 zwischen Maßstab 14 und Gehäuse 16 befindet sich demzufolge im Bereich des Endstücks 17, so daß sich der Maßstab 14 und das Gehäuse 16 relativ zueinander temperaturbedingt in Richtung auf die offene Seite des Gehäuses 16 hin unterschiedlich ausdehnen können.

Möglich ist eine Ausführungsform mit durchgehendem Joch 26 verläuft entlang dessen gesamter Längserstreckung. Es umfaßt die Nuten 28, in denen die Kugeln 21 geführt sind. Die Kugeln 21 stehen also nicht in unmittelbarem Kontakt mit dem Maßstab 14, sondern greifen dort an dem Joch 26 an, gegenüber in den Nuten 28 im Profilstrang 19 bzw. dessen Federsteg 24. Der Maßstab 14 kann sehr schmal und dadurch biegeweich ausgebildet sein, weil die erforderliche Biegesteifigkeit der Maßverkörperung durch das Joch 26 erzielt wird.

Möglich ist weiter eine Ausführungsform, in der Joche 26 abschnittsweise am Maßstab 14 angebracht sind. Da die Joche 26 die Lagerung des Maßstabs 14 bewerkstelligen, sind sie im Abstand der Kugeln 21 angeordnet und umfassen Nuten, in die die Kugeln 21 eingreifen. Diese Ausführungsform eignet sich insbesondere dann, wenn unterschiedliche Materialien für die Joche 26 einerseits und den Maßstab 14 andererseits verwendet sind und die Materialien einen unterschiedlichen thermischen Ausdehnungskoeffizienten aufweisen. Daraus resultierende Spannungen zwischen dem Maßstab 14 und einem Joch 26 treten dann nur auf kurzen Strecken des Maßstabs 14 auf und beeinflussen die Genauigkeit des Geberelements 1 nur unwesentlich.

## Patentansprüche

1. Geberelement (1) eines Meßsystems zur Erfassung einer Längsbewegung eines ersten Bauteils (2) gegenüber einem zweiten Bauteil, wobei das Geberelement (1) zur Befestigung an dem ersten Bauteil (2) ausgebildet ist und eine Maßverkörperung (14, 15, 26) aufweist, die in einem Fixpunkt (20) am ersten Bauteil (2) starr befestigbar ist und die in einem ebenfalls am ersten Bauteil (2) starr befestigbaren Profilteil (19) in der Richtung der Relativbewegung der Bauteile geführt ist, um unterschiedliche thermische Ausdehnungen von befestigtem Profilteil (19) und Maßverkörperung (14, 15, 26) auszugleichen, wobei die Führung durch eine im Wesentlichen fluidfreie Lagerung (21, 22, 23) der Maßverkörperung (14, 15, 26) im Profilteil (19) bewirkt und als Wälzlagerung (21, 22, 23) mit Wälzkörpern (21) ausgebildet ist, **dadurch gekennzeichnet, daß** die Wälzkörper (21 ) in Nuten (28) eingesetzt sind, die an den Lagerflächen von Profilteil (19) und Maßverkörperung (14, 15, 26) längs der Maßverkörperung verlaufen.

2. Geberelement (1) nach Anspruch 1, **gekennzeichnet durch** eine an der Maßverkörperung (14, 15, 26) mehrseitig angreifende Lagerung (21, 22, 23).

3. Geberelement (1) nach Anspruch 2, **dadurch gekennzeichnet, daß** die Lagerung an der Maßverkörperung (14, 15, 26) an einander gegenüberliegenden Flächen (27) angreift.

4. Geberelement (1) nach Anspruch 1, **dadurch gekennzeichnet, daß** die Wälzlagerung (21, 22, 23) Montagehilfen (22) umfaßt, die als Abstandhalter beim Zusammenbau von Profilteil (19) und Maßverkörperung (14, 15, 26) einen vorbestimmten Abstand zwischen den Wälzkörpern (21) sicherstellen.

5. Geberelement (1) nach Anspruch 4, **dadurch gekennzeichnet, daß** die Wälzkörper (21) auf einer Schnur (22) als Abstandhalter aufgefädelt sind, die beidseits jedes Wälzkörpers (21) eine Verdickung (23) zur Definition der Lage des Wälzkörpers (21) aufweist.

6. Geberelement (1) nach einem der Anspruch 1, **dadurch gekennzeichnet, daß** das Profilteil (19) einen Federsteg (24) aufweist, der die Wälzkörper (21) mit dem Maßstab (14, 15, 26) verspannt.

7. Geberelement (1) nach einem der obigen Ansprüche, **dadurch gekennzeichnet, daß** die Maßverkörperung (14, 15, 26) einen Maßstab (14) und eine jochförmige Fassung (26) umfaßt, mit der die Maßverkörperung (14, 15, 26) in dem Profilteil geführt ist, wobei die maßverkörperungsseitigen Nuten (28) in der Fassung (26) gebildet sind.

## Claims

1. Sensor element (1) of a measurement system for sensing a longitudinal movement of a first part (2) relative to a second part, which sensor element (1) is provided for attachment to the first part (2) and comprises a gauge (14, 15, 26) that is rigidly attachable to the first part (2) at a fixed point (20) and is guided in a profiled part (19), also rigidly attachable to the first part (2), in the direction of the relative movement of the parts so as to compensate for different thermal expansions of the attached profiled part (19) and gauge (14, 15, 26), said guiding being effected by a substantially fluid-free bearing (21, 22, 23) of the gauge (14, 15, 26) in the profiled part (19) and being provided as a roller bearing (21, 22, 23) comprising roll bodies (21), **characterized in that** the roll bodies (21) are inserted in grooves (28) which extend on the bearing surfaces of the profiled part (19) and of the gauge (14, 15, 26) along the gauge.

2. Sensor element (1) according to claim 1, **characterized by** a bearing (21, 22, 23) which multilaterally acts on the gauge (14, 15, 26).

3. Sensor element (1) according to claim 2, **characterized in that** the bearing acts on the gauge (14, 15, 26) at opposite surfaces (27).

4. Sensor element (1) according to claim 1, **characterized in that** the roller bearing (21, 22, 23) comprises mounting aids (22), which serve as spacers ensuring a predetermined spacing between the roll bodies (21) during assembly of the profiled part (19) and gauge (14, 15, 26).

5. Sensor element (1) according to claim 4, **characterized in that** the roll bodies (21) are threaded as spacers on a cord (22) which comprises a bulge (23) on both sides of each roll body (21) so as to define the position of the roll body (21).

6. Sensor element (1) according to claim 1, **characterized in that** the profiled part (19) comprises a spring web (24) which braces the roll bodies (21) with the rule (14, 15, 26).

7. Sensor element (1) according to any one of the above claims, **characterized in that** the gauge (14, 15, 26) comprises a rule (14) and a yoke-shaped mount (26) by which the gauge (14, 15, 26) is guided in the profiled part, and the grooves (28) on the side of the gauge are formed in the mount (26).

## Revendications

1. Elément de capteur (1) d'un système de mesures pour détecter un mouvement longitudinal d'une première pièce (2) par rapport à une deuxième pièce, l'élément (1) étant conformé pour être fixé sur la première pièce (2) et présentant une mesure matérialisée (14, 15, 26) qui peut être rigidement fixée en un point fixe (20) de la première pièce (2) et est guidée dans la direction du mouvement relatif des pièces dans un profilé (19) également fixé rigidement sur la première pièce (2) pour compenser différentes dilatations thermiques du profilé (19) fixé et de la mesure matérialisée (14, 15, 26), le guidage étant formé par un montage sur palier essentiellement dépourvu de fluides (21, 22, 23) de la mesure matérialisée (14, 15, 26) dans le profilé (19) et étant conformée en palier à roulement (21, 22, 23) avec des corps de roulement (21), **caractérisé en ce que** les corps de roulement (21) sont introduits dans des rainures (28) qui s'étendent sur les surfaces de palier du profilé (19) et de la mesure matérialisée (14, 15, 26), le long de la mesure matérialisée.

2. Elément de capteur (1) selon la revendication 1, **caractérisé par** un palier (21, 22, 23) s'appuyant de plusieurs côtés sur la mesure matérialisée (14, 15, 26).

3. Elément de capteur (1) selon la revendication 2, **caractérisé en ce que** le palier s'appuie sur la mesure matérialisée (14, 15, 26) par ses surfaces (27) situées en face les unes des autres.

4. Elément de capteur (1) selon la revendication 1, **caractérisé en ce que** le palier à roulement (21, 22, 23) comporte des accessoires de montage (22) qui assurent en tant, lors de l'assemblage du profilé (19) et de la mesure matérialisée (14, 15, 26), un écart prédéterminé entre les corps de roulement (21).

5. Elément de capteur (1) selon la revendication 4, **caractérisé en ce que** les corps de roulement (21) sont enfilés dans un cordon (22) formant une entretoise qui présente, de part et d'autre de chaque corps de roulement (21), un épaississement (23) pour définir la position du corps de roulement (21).

6. Elément de capteur (1) selon la revendication 1, **caractérisé en ce que** le profilé (19) présente un rebord élastique (24) qui serre les corps de roulement (21) avec la mesure matérialisée (14, 15, 26).

7. Elément de capteur (1) selon l'une quelconque des revendications précédentes, **caractérisé en ce que** la mesure matérialisée (14, 15, 26) comporte une échelle (14) et une monture en forme de joug (26) avec laquelle la mesure matérialisée (14, 15, 26) est guidée dans le profilé, les rainures (28) situées du côté de la mesure matérialisée étant formées dans la monture (26).
